# EUROPEAN PATENT APPLICATION

(11) **EP 2 182 450 A1**
(43) Date of publication of application: **05.05.2010**
(21) Application number: 09174722.0
(22) Date of filing: 30.10.2009
(51) Int. Cl.: G06F 17/30

(54) **Method and apparatus for file association**

(30) Priority: 31.10.2008 GB 0820077
(71) Applicant: Nokia Corporation, 02150 Espoo (FI)
(72) Inventor: Moondra, Alok, 560103, Bangalore (IN)
(74) Representative: Andrews, Claire

(57) **Abstract**

A method and apparatus for associating a secondary file (24) created by an application (16) with a primary file (26) from which the secondary file (24) is derived, wherein the primary file (26) is labelled as a primary file, the secondary file (24) is labelled as a secondary file and a record of the association of the secondary file (24) with the primary file (26) is created.

## Description

### Technical Field

The present invention relates to a method and apparatus for associating a secondary file with a primary file from which the secondary file is derived.

### Background

In portable computing devices such as mobile telephones, memory resources are typically limited, and thus must be carefully managed to ensure that they are used as efficiently as possible. Software applications which run on such devices are designed to provide a good user experience, but this can sometimes result in inefficient use of memory resources. For example, in a photo gallery application for a mobile telephone, small "thumbnail" images representing larger images may be generated by the application to allow a user to browse and select images for viewing, downloading or printing, for example. Each of these thumbnail images is associated with a corresponding full-size image within the gallery application, such that when a thumbnail image is selected, the corresponding full-size image can be viewed, downloaded or printed, for example. Each of the thumbnail images occupies some of the memory of the device.

### Summary of Examples of the Invention

A first example of the invention provides a method comprising: labelling a primary file as a primary file; labelling a secondary file as a secondary file, wherein the secondary file is created by an application and derived from the primary file; and, creating a record of the association of the secondary file with the primary file.

In an example, labelling the primary file and the secondary file comprises adding an attribute to each of the primary file and the secondary file. In another example, the attribute is added to the primary file and to the secondary file as an extended file attribute.

In an example, creating a record of the association of the secondary file with the primary file comprises populating a list with details of the secondary files associated with the primary file. In another example, the list is part of a file system. In a further example, the list is an attribute of the primary file.

In an example, the method further comprises performing a predefined operation on the secondary file when another application performs an operation on the primary file. In another example, the secondary file is identified using the record and the primary file's label before the predefined operation is performed. In a further example, the predefined operation performed on the secondary file is the same as the operation performed on the primary file. In another further example, the predefined operation is a file management operation.

A second example of the invention provides an apparatus configured to perform the method of the first example. In an example, the apparatus is a mobile phone.

A third example of the invention provides a computer program, comprising: code for labelling a primary file as a primary file; code for labelling a secondary file as a secondary file, wherein the secondary file is created by an application and derived from the primary file; and, code for creating a record of the association of the secondary file with the primary file. In an example, the computer program is an application programming interface.

A fourth example of the invention provides a computer-readable medium encoded with the computer program of the third example.

A fifth example of the invention provides an application programming interface for performing the method according to the first example.

### Brief Description of the Drawings

Examples of the invention will now be described with reference to the accompanying drawings, of which:
Figure 1 is a schematic illustration showing selected elements of a mobile telephone according to an example of the invention;
Figure 2 is a schematic illustration of interactions between applications, primary and secondary files and a file system running on a computing device, according to the example of Figure 1;
Figure 3 is a flow diagram illustrating the operation of the example of Figure 1;
Figure 4 is a schematic illustration showing selected elements of a mobile telephone according to another example of the invention;
Figure 5 is a schematic illustration of interactions between applications, primary and secondary files and a file system running on a computing device, according to the example of Figure 4; and,
Figure 6 is a flow diagram illustrating the operation of the example of Figure 4.

### Description of Examples of the Invention

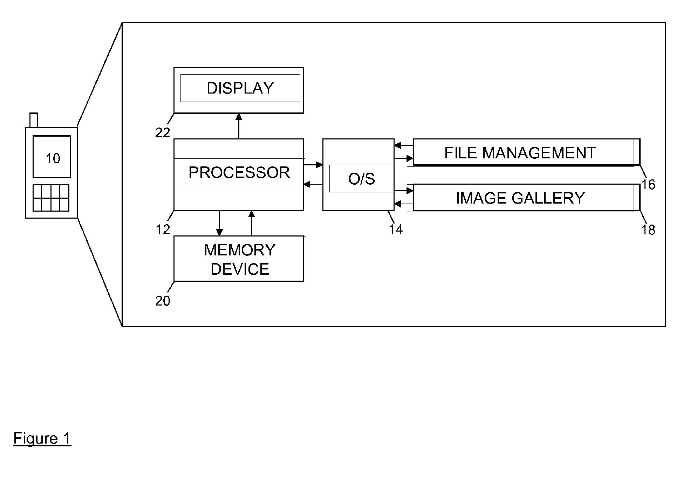

Referring first to Figure 1, a computing device such as a mobile telephone 10 comprises a processor 12 for running applications such as an operating system 14, a file manager application 16 and an image gallery application 18 for example. The mobile telephone 10 further comprises a memory element 20, which may comprise a flash memory element or other non-volatile memory element which is used to store data, for example images which may be displayed by the image gallery application 18. A display 22, such as a liquid crystal display (LCD) is also provided, which is driven by the processor (via display driver software and/or hardware), and enables visual information to be provided to a user of the mobile telephone 10. For example, images displayed by the image gallery application 18 may be displayed on the display 22.

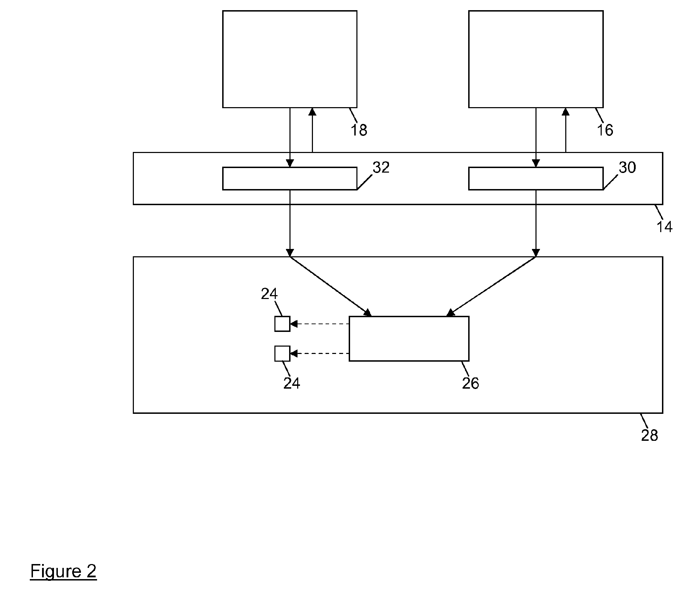

Figure 2 illustrates interactions which take place between the operating system 14, the file manager application 16, the image gallery application 18 and files 24, 26 created and/or used by the file manager application 16 and the image gallery application 18.

The image gallery application 18 is accessed via the operating system 14, and is used to display images stored in the memory element 20 on the display 22. The image gallery application 18 is configured to create one or more secondary "thumbnail" (reduced-size) images 24 of each full-size (primary) image 26 stored in the memory element 20, and these thumbnail images 24 are displayed as a gallery view on the display 22 to permit a user to select one or more of the full-size images 26 to display, download, print or forward, for example, without having to view all of the individual images in turn.

The primary and secondary images 26, 24 are stored in the memory element 20 as image files, and are managed by a file system 28 of the mobile telephone 10. Each image file managed by the file system has a number of attributes such as file name, size, time of creation/modification and the like. The file system 28 associates each secondary (thumbnail) image file 24 with the corresponding primary (full-size) image file 26, by allocating an attribute indicating whether the file is a primary or secondary file to each file 24, 26. As various file systems support file attributes, this example may be used with a variety of platforms, operating systems and file systems.

The file system 28 also creates and maintains records of the associations between each primary file 26 and its associated secondary file(s) 24. These records may be in the form of list or table recording the name or another identifier of each primary file 26 against the name or other identifier of each secondary file 24 associated with the primary file 26. The list or table may be stored as part of the file system 28, or may be provided as a separate attribute of each primary file 26.

In one example, the attribute indicating whether the file is a primary or secondary file is stored as an extended file attribute of the file, and the list or table recording the name or other identifier of each secondary file 24 associated with a primary file 26 may also be stored as an extended file attribute of the primary file 26. Of course, this is only possible where the file system 28 of the mobile telephone 10 supports extended file attributes. As extended file attributes are not specific to any particular file type, the use of extended file attributes in this way allows this example to be used with any type of file, for example image files such as jpeg files, or media files such as mpeg files.

To enable the attributes discussed above to be added to the primary and secondary files 24, 26, and to be detected by applications other than the image gallery application 18, such as the file manager application 16, the operating system 14 of the mobile telephone 10 includes Application Programming Interfaces (APIs) 30, 32 which act as interfaces between the file system 28, the operating system 14 and the applications 16, 18. The APIs 30, 32 provide functionality which is used by the applications 16, 18 in creating, editing, deleting and otherwise managing files 24, 26. For example, when a secondary (thumbnail) image 24 is created by the image gallery application 18, an attribute indicating that the primary full size image 26 from which the secondary thumbnail image 24 is derived is the primary file 26 is created and allocated to the primary file 26. At the same time, an attribute indicating that the secondary thumbnail image file 24 is the secondary file is created and allocated to the secondary file 24. A list or table indicating that the secondary file 24 is associated with the primary file 26 is also created and is allocated to the primary file 26, either as an attribute or an extended attribute as described above. Alternatively, the list or table may be stored by the file system 28. In this way, the association of the primary file 26 with the or each secondary file 24 is recorded in a manner which is visible to other applications running on the mobile telephone 10. Thus, the file manager application 16 is aware of the association between the primary file 26 and the secondary file 24. In the event that the file manager application 16 is used to delete the primary file 26, the API 30 is able to detect or read the attribute indicating that it is a primary file 26. The API 30 then searches for the list or table of associated secondary files 24, and ensures that the or each secondary file 24 associated with the primary file 26 is deleted at the same time as the primary file 26. In this way, when the primary file 26 is deleted from outside the image gallery application 18, any associated secondary (thumbnail) files are also deleted, ensuring that the secondary thumbnail images are not displayed the next time the image gallery application 18 is used, and liberating the memory resources used by the secondary file(s) 24 for use for another purpose.

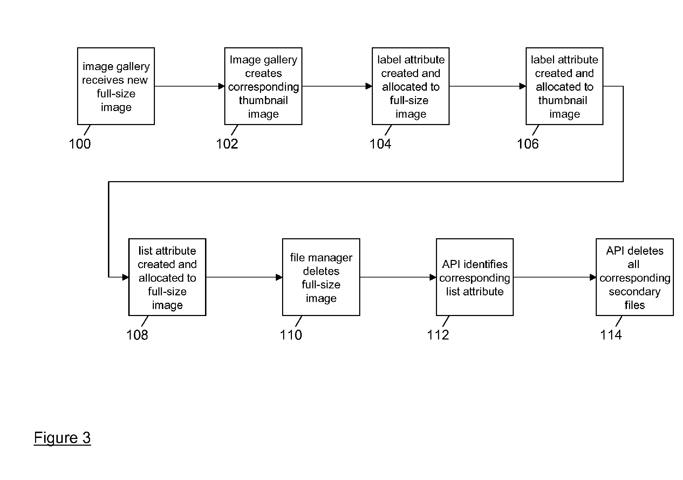

Figure 3 is a flow diagram showing the operation of an example of the invention. At block 100, the image gallery application 18 receives a new full-size image 26. For example, the new image may be received from a camera in communication with the device 10, or the new image may be received from another application of the device 10, such as, an email or messaging application. At block 102, the image gallery application 18 creates a thumbnail image 24 corresponding to the full-size image 26. At block 104, the API 32, together with the file system 28, creates and allocates a label attribute to the full-size image 26 which indicates that the full-size image 26 is a primary file. At block 106, the API 32, together with the file system 28, creates and allocates a label attribute to the thumbnail image 24 which indicates that the thumbnail image 24 is a secondary file. At block 108, the API 32 together with the file system 28, creates and allocates a list attribute to the full-size image 26 to indicate that the secondary thumbnail file 24 is associated with the full-size image 26. In this way, the association of the primary file 26 with the or each secondary file 24 is recorded in a manner which is visible to other applications running on the mobile telephone 10. Stated differently, there is a global record of associations in the file system, which enables all applications on the device 10 to be aware of the associations.

At block 110, the file manager application 16 deletes the full-size image. It is to be understood that this operation could be caused by a user of the device 10, or by one of the applications of the device 10. In either case, at block 112, the API 30, together with the file system 28, identifies a list attribute corresponding to the full-size image 26, if one exists. In the absence of a list attribute, processing according to the present example finishes because no secondary files are associated with the full-image primary file 26. However, in the present case, the full-size image 26 does have a list attribute. At block 114, the API 30 identifies and deletes all the secondary files 24 associated with the full-size image 26, i.e. all those files referenced in the full-size image's list attribute. Stated differently, the thumbnail image 24, created at block 102, is deleted at block 114 because the full-image file 26 is deleted at block 110. It should be noted that one or more other device operations may be performed in-between the operations of block 108 and block 110. Alternatively, processing may be delayed, such as in the case where there is a time delay in-between the operation of block 108 finishing and the operation of block 110 starting.

The example above permits efficient use of memory resources, as it ensures that file operations carried out on the primary file, by applications other than that which created the secondary file, also affect any associated secondary files. For example, in the event that a primary file which has been associated with a secondary file using an example of the present invention is deleted, any associated secondary files are also deleted, meaning that the memory occupied by the secondary file(s) is freed for other purposes.

The example above describes a situation in which a primary file 26 is deleted from outside of the image gallery application 18, but it will be appreciated that the same principles apply to other file management operations, such as moving or copying files. Thus, when a primary file 26 is moved from one location to another, the API 30 ensures that any associated secondary files 24 are also moved, meaning that an application which uses the primary and secondary files 26, 24 is able to use the moved files correctly. Similarly, if a primary file 26 is copied, the API 30 ensures that any associated secondary files 24 are also copied meaning that an application which uses the copied primary and secondary files 26, 24 is able to function correctly. Alternatively, when a primary file 26 is moved or copied, the API 30 may simply cause any associated secondary files 24 to be deleted, to be re-calculated at a later time if required.

Accordingly, in some examples of the invention, the mobile telephone is configured to perform predefined operations on secondary files when an operation is performed on an associated primary file. The predefined operation may be complementary to the operation performed on the primary file. The operation or predefined operation could be a file management operation, including, but not limited, to editing, moving, copying or deleting. The predefined operation could be the same operation which was performed on the primary file. For example, if the primary file is edited then the secondary file is edited in a corresponding way. Alternatively, the predefined operation could be different from the operation performed to the primary file. For example, if the primary file is edited then the secondary file is deleted (to be re-created at a later time if required). In either case, the secondary file is identified using the list attribute of the primary file by the API when the primary file is operated upon.

It is an advantage of this example of the invention that file management of the secondary files is isolated from the applications of the device 10 because it is handled by the APIs. This is possible because a record of file associations is available within the file system. This advantage enables the complexity of applications, such as the image gallery application to be reduced. Previously, when the image gallery application was used to delete a primary image file the image gallery application was responsible for identifying the presence of any secondary image files. If such secondary files were present, then the image gallery had to delete them. The gallery application had the same responsibility if the primary file was subjected to other file management operations, such as, moving, editing, copying, etc from within the gallery application. According to the present example, the gallery application does not need to consider file management of secondary files. As a globally accessible list is available to the file system, the APIs of the present example can handle file management of all secondary files, irrespective of which application created the files. Stated differently, a file connectivity feature is provided within the file system. This in turn reduces the complexity of applications, such as, the image gallery as they do not need to handle secondary file management.

Although examples of the present invention have been described using the example of an image gallery application 18 running on a mobile telephone 10, it will be appreciated that other examples are also applicable to other types of application. None of the examples are restricted to mobile telephones. For example, some examples of the present invention could be used in conjunction with a web browser application to associate secondary image files, sound files and the like used by a web page with a primary file containing the web page layout in a personal computer. Such examples may improve the speed with which previously viewed web pages are displayed, as each of the secondary files associated with the web page can be easily found and retrieved by the personal computer. Naturally, the advantages relating to file management, correct application functionality, reduced complexity and improved memory efficiency described above are also present when examples are used in conjunction with a web browser or other application.

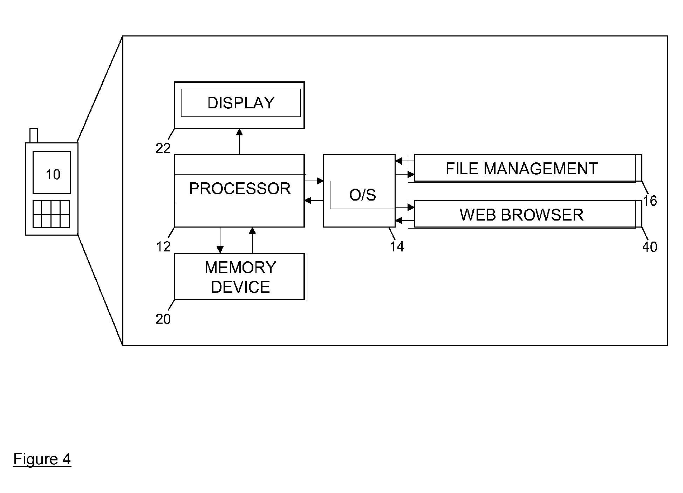

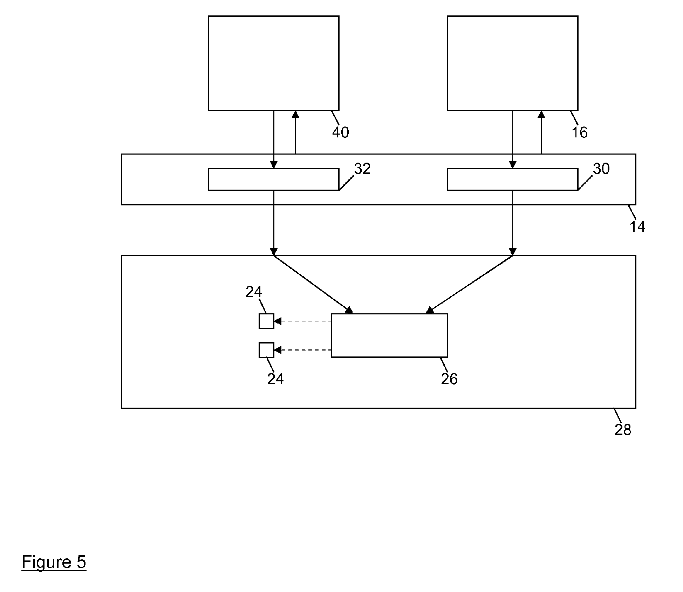

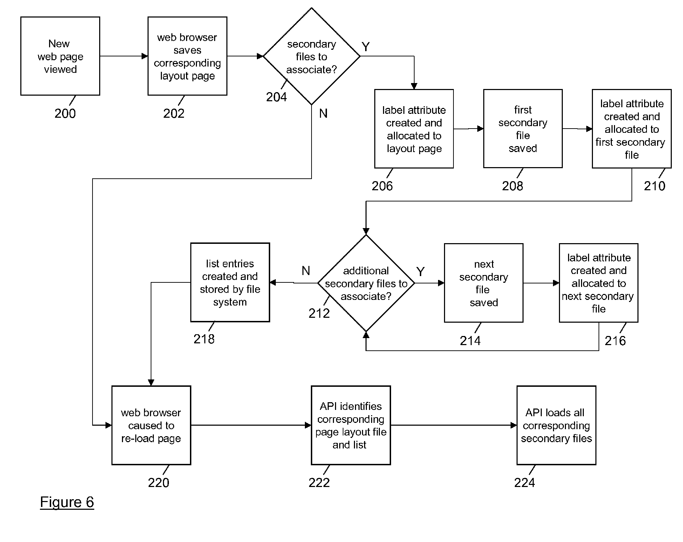

Figures 4 to 6 represent a web-browser example. Figures 4 and 5 correspond to Figures 1 and 2, and show that a web-browser application 40 takes the place of the image gallery application 18. Figure 6 provides a flow diagram representing a method of operation of the mobile telephone 10. At block 200, the web browser 40 is navigated to a new page. It is to be understood that a user of the device 10 could cause the web browser 40 to navigate to the new page, or one of the other applications of the device 10 could cause the web browser to navigate to the new page. At block 202, the web browser application 40 saves a layout page 26 corresponding to the new page just navigated to. In the present example, 'layout page' is used to describe the basic layout of the webpage devoid of any ancillary data such as image, sound or video files. At block 204, the API 32 identifies the presence of any ancillary data, such as, image, sound or video files.

At block 206, if at least one ancillary data file is present, a label attribute is created and allocated to the layout page 26 saved at block 202, indicating that the layout page 26 is a primary file. At block 208, the API 32 saves the first file 24 of ancillary information (termed the first secondary file 24). At block 210, the API 32, together with the file system 28, creates and allocates a label attribute to the first secondary file 24 to indicate that it is a secondary file. At block 212, the API 32 identifies if there are any other secondary files 24 present which relate to the layout page 26 saved at block 202. In the event that more secondary files 24 are present, each new secondary file 24 is saved and allocated a label attribute identifying that they are secondary files (blocks 214, 216). Once all secondary files have been processed, the API 32, with the file system 28, creates entries in a list, within the file system 28, to record the file associations on the device 10 (block 218). For example, the list will contain an entry for the layout page 26 and each secondary file 24 associated therewith, such as, any corresponding image, sound or video files. The list provides a global record within the file system so that all applications on the device 10 are aware of all file associations. In the present example, a single global list is provided, which contains entries for all file associations on the device 10. In some other examples, a global list is provided within the file system for each primary file, in which each list contains an entry for each secondary file associated with the primary file which corresponds to the list.

At block 220 the web-browser application 40 is navigated back to the web page which was loaded at block 200. It is to be understood that this operation could be caused by a user of the device 10 or one of the other applications of the device 10. At block 222, the API 32 identifies the page layout file 26 and the global list within the file system. At block 224, the API 32 loads the layout page 26 and each of the secondary files 24 associated with the layout page and which are listed.

According to this operation, the time delay which occurs before previously viewed web pages are displayed is reduced because each of the secondary files associated with the web page can be easily found and retrieved by the device 10. It should be noted that where one or more other device operations may be performed in-between the operations of block 218 and block 220. Alternatively, processing may be delayed, such as in the case where there is a time delay in-between the operation of block 218 finishing and the operation of block 220 starting.

It is to be understood that the features of the examples described above may be combined to form one or more further examples. In one such further example, the features of the examples of Figures 3 and 6 are combined. In this example, if a move, copy, edit or delete function (i.e. a file management operation) is performed on the layout page by any application of the device 10, the API performs a predefined operation on each secondary file listed. The operation could be the same operation which was performed on the primary file or could be a different operation. Furthermore, the list could either be an attribute of the layout page (primary file) or be stored separately by the file system. In either case, the list is globally accessible so that file associations are visible to all applications of the device 10. In the case where the list is an attribute of the primary file, the secondary file(s) is/are identified by consulting the list when operating on the primary file. In the case where the list is stored separately by the file system, the secondary file(s) is/are identified by consulting the list with the primary files label.

It is an advantage of the examples of Figures 3 and 6 that these examples can be used to manage any type or name of file. Therefore, the features and advantages of these examples can be achieved with reference to different types of files, such as, but not limited to, text files, image files, sound files, HTML files, binary files or video files.

It is a further advantage of the examples of Figures 3 and 6 that hidden files can be managed. It is sometimes the case that secondary files are created by an application but hidden from the user of the device 10. For example, the secondary thumbnail image according to the example of Figure 3, or one or more of the ancillary files according to the example of Figure 6 may not be visible to the user. This situation sometimes occurs because a user of the device 10 does not specifically instruct creation of the secondary file and so it is sometimes considered unnecessary to risk confusing the user by making the file visible, i.e. not hidden. According to this operation, the user would be incapable of knowing of the existence of the secondary file and therefore, would not perform a predefined operation on a hidden secondary file in response to a delete, move, copy or edit operation performed on a corresponding primary file. However, the APIs could still operate as described with reference to Figures 3 and 6 so that predefined operations are performed on secondary files regardless of whether the files are hidden or not.

The above examples of the invention describe a software or computer program implementation of the invention. Other examples of the invention include a hardware only implementation and a hardware and software implementation. Another example of the invention includes a computer readable medium having stored thereon the software or computer program implementation described above.

## Claims

1. A method comprising:
labelling a primary file as a primary file;
labelling a secondary file as a secondary file, wherein the secondary file is created by an application and derived from the primary file; and,
creating a record of the association of the secondary file with the primary file.

2. A method according to claim 1 wherein labelling the primary file and the secondary file comprises adding an attribute to each of the primary file and the secondary file.

3. A method according to any one of the preceding claims wherein creating a record of the association of the secondary file with the primary file comprises populating a list with details of the secondary files associated with the primary file.

4. A method according to claim 4 wherein the list is part of a file system.

5. A method according to claim 4 wherein the list is an attribute of the primary file.

6. A method according to any preceding claim further comprising performing a predefined operation on the secondary file when another application performs an operation on the primary file.

7. A method according to claim 6 wherein the secondary file is identified using the record and the primary file's label before the predefined operation is performed.

8. A method according to claim 6 or claim 7 wherein the predefined operation performed on the secondary file is the same as the operation performed on the primary file.

9. A method according to any one of claims 6 to 8 wherein the predefined operation is a file management operation.

10. An apparatus configured to perform the method as claimed in any one of claims 1 to 9.

11. The apparatus according to claim 10 wherein the apparatus is a mobile phone.

12. A computer program, comprising:
code for labelling a primary file as a primary file;
code for labelling a secondary file as a secondary file, wherein the secondary file is created by an application and derived from the primary file; and,
code for creating a record of the association of the secondary file with the primary file.

13. The computer program according to claim 12 wherein the computer program is an application programming interface.

14. A computer-readable medium encoded with the computer program of claim 12.

15. An application programming interface for performing the method of any one of claims 1 to 9.
